(19) Europäisches Patentamt
European Patent Office
Office européen des brevets

(11) **EP 4 070 195 B1**

(12) **FASCICULE DE BREVET EUROPEEN**

(45) Date de publication et mention
de la délivrance du brevet:
**27.09.2023 Bulletin 2023/39**

(21) Numéro de dépôt: **20803431.4**

(22) Date de dépôt: **12.11.2020**

(51) Classification Internationale des Brevets (IPC):
*G06F 11/07* (2006.01)   *G06F 11/14* (2006.01)
*G06F 11/16* (2006.01)   *G06F 11/18* (2006.01)
*G06F 11/30* (2006.01)

(52) Classification Coopérative des Brevets (CPC):
**G06F 11/3013; G06F 11/0739; G06F 11/0754;
G06F 11/1471; G06F 11/1629; G06F 11/183**

(86) Numéro de dépôt international:
**PCT/EP2020/081922**

(87) Numéro de publication internationale:
**WO 2021/110380 (10.06.2021 Gazette 2021/23)**

(54) **SYSTÈME INFORMATIQUE EMBARQUÉ À BORD D'UN PORTEUR METTANT EN OEUVRE AU MOINS UN SERVICE CRITIQUE POUR LA SÛRETÉ DE FONCTIONNEMENT DU PORTEUR**

ONBOARD KOMPUTER SYSTEM MIT WENIGSTENS EINEN KRITISCHEN SERVICE FÜR SEINER SICHERHEIT

EMBARKED COMPUTER SYSTEM INVOLVING AT LEAST ONE CRITICAL SERVICE FOR ITS SAFETY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2019 FR 1913853**

(43) Date de publication de la demande:
**12.10.2022 Bulletin 2022/41**

(73) Titulaire: **Commissariat à l'Energie Atomique et aux Energies Alternatives
75015 Paris (FR)**

(72) Inventeur: **HAMELIN, Etienne
91191 GIF-SUR-YVETTE CEDEX (FR)**

(74) Mandataire: **Atout PI Laplace
Immeuble "Visium"
22, avenue Aristide Briand
94117 Arcueil Cedex (FR)**

(56) Documents cités:
**WO-A1-01/46806      US-A1- 2017 116 089
US-A1- 2019 235 448**

**Description**

L'invention porte sur une architecture matérielle et/ou logicielle embarquée composée de services (ou composants) logiciels, en interaction avec un dispositif concentrant les données (par exemple une architecture « orientée service » munie d'un concentrateur de données ou « broker » ou « data functional bus » en langue anglaise).

Certaines fonctions critiques pour la sûreté de fonctionnement sont implémentées par des systèmes embarqués complexes mis en oeuvre sous forme matérielle et logicielle, telles un déclenchement d'airbags ou un freinage automatique d'urgence d'un véhicule.

Il est particulièrement difficile et coûteux de développer et qualifier (voire certifier) ces systèmes au niveau de sûreté de fonctionnement suffisant, et il est d'autant plus complexe et coûteux que l'architecture matérielle ou logicielle sous-jacente est complexe.

Pour améliorer la sûreté et la disponibilité de fonctions critiques implémentées en logiciel, il est courant de déployer plusieurs implémentations redondantes, en mode nommée « lock-step » qui consiste à utiliser au moins deux unités d'exécution physiques (par exemple deux calculateurs ou CPU pour acronyme de « central processing unit » en langue anglaise, sur un même système sur puce ou SoC pour acronyme de « system on chip » en langue anglaise), exécutant exactement le même code au même instant.

Un dispositif matériel intégré au système sur puce détecte immédiatement lorsque les registres, ou les accès mémoire, des deux coeurs sont différents : ce qui signale qu'une défaillance est apparue dans au moins un des deux coeurs, il faut donc basculer sur un mode dégradé (par exemple redémarrer la fonction, ou la désactiver, signaler la défaillance, enclencher un mode d'exécution secondaire, etc.).

Le lock-step classique n'est cependant possible qu'entre deux calculateurs physiquement proches, pour comparer leurs registres ou leurs mémoires. L'invention permet d'exploiter des calculateurs distants, connectés en réseau.

Le lock-step classique nécessite des unités d'exécution identiques, exécutant exactement le même jeu de tâches logicielles (afin de que les exécutions soient cycle-à-cycle identiques, hors défaillance).

Un but de l'invention est de pallier les problèmes précédemment cités, et notamment d'assurer une sûreté de fonctionnement à coût et complexité réduits.

Il est proposé, selon un aspect de l'invention, un système informatique embarqué à bord d'un porteur, communiquant en réseau avec un concentrateur de données et avec un moniteur, et mettant en oeuvre au moins un service critique pour la sûreté de fonctionnement du porteur, le service critique étant en redondance en au moins deux instances sur des calculateurs respectifs différents connectés audit réseau,

- chaque calculateur mettant en oeuvre au moins une tâche logicielle implémentant une instance du service critique, et étant configuré pour mettre en oeuvre le service critique par cadencement par le temps en utilisant :
- une suite croissante de dates d'activation de tâche et une suite de dates correspondantes de fin au plus tard de tâche, relatives au démarrage du système, avec un écart entre une date de fin et la date d'activation correspondante supérieur ou égal à un seuil correspondant à une estimation du temps d'exécution ou du temps de réponse de la tâche ;
- une sauvegarde d'un état interne du calculateur entre deux activations successives du service par modélisation par enregistrement des états de mémoires de la tâche ;
- une mise à jour de l'état interne du calculateur à chaque activation du service, démarrant après la date d'activation correspondante lit les données d'entrée ($i_n$) du service et calcule les données de sortie du service et les fournit au concentrateur de données, la dépendance entre d'une part l'état interne mis à jour et les données de sortie calculées et d'autre part l'état interne précédent et les données d'entrée lues étant représentée par une fonction de transfert ; et
- un serveur relai, ou « proxy » en langue anglaise, configuré pour calculer une signature, caractéristique de l'exécution de l'instance du service depuis l'activation initiale du système jusqu'à la date de fin au plus tard en cours, par une chaîne de hachage dépendant d'une fonction de hachage sur nb bits, et pour transmettre la signature au moniteur ;

le moniteur détectant une défaillance en analysant les signatures des instances.

Un tel système permet d'assurer une sûreté de fonctionnement à coût et complexité réduits.

Dans un mode de réalisation, un serveur relai est configuré pour calculer la signature par une chaîne de hachage utilisant une fonction de hachage cryptographique H, par récurrence pour chaque instance k, à chaque période (ou pas de temps) n, par la relation suivante :

$$h_{n+1}^k = H\left(h_n^k, i_n^k, o_n^k\right)$$ dans laquelle :

$h_{n+1}^k$ représente la signature de l'instance k à la période n+1 ;

$h_n^k$ représente la signature de l'instance k à la période n ;

$i_n^k$ représente les données d'entrées du service de l'instance k à la période n ; et

$o_n^k$ représente les données de sortie du service de l'instance k à la période n.

Ainsi, la valeur $h_n^k$ est une signature caractéristique de l'historique des données d'entrée et de sortie du service critique depuis son démarrage, dont le volume de données est constant, et faible (typiquement 256 bits) au regard de l'ensemble des données d'entrées et sortie du service critique depuis son démarrage.

Selon un mode de réalisation, le moniteur est configuré pour détecter une défaillance temporelle lorsqu'une signature des instances n'a pas été reçue avant la date de fin au plus tard de la période courante.

Ainsi le moniteur contribue à la détection des défaillances temporelles des instances du service critique.

Dans un mode de réalisation le moniteur est configuré pour comparer les signatures reçues des serveurs relais détecter une défaillance fonctionnelle lorsqu'une signature des instances diffère des autres signatures.

Ainsi le moniteur détecte si au moins une des instances du service critique présente une défaillance fonctionnelle.

Selon un mode de réalisation, le moniteur détecte une défaillance lorsque les signatures des instances sont égales mais qu'un état interne et/ou des données de sortie diffère des autres.

Ainsi lorsque le nombre d'instances du service est au moins égal à trois, et que moins de la moitié de ces instances sont défaillantes, le moniteur est configuré pour effectuer un vote majoritaire parmi les signatures reçues à temps fournissant une signature majoritaire désignant les instances fonctionnelles, les signatures différentes de la signature majoritaire désignant les instances défaillantes, et configuré pour signaler au reste du système les instances fonctionnelles et les instances défaillantes de sorte que la transmission des instances défaillantes soit interrompue sur le concentrateur de données.

Ainsi, le dispositif assure une détection et isolation des fautes fonctionnelles et temporelles des répliques, et tolérance aux pannes ce qui améliore la disponibilité globale du service.

Par exemple, lorsqu'une instance est détectée comme défaillante à une période nd, le calculateur hébergeant l'instance défaillante est configuré pour récupérer une copie d'un état de mémoire interne correct d'une autre instance fonctionnelle correspondant à la période nd, redémarrer l'instance défaillante à partir de l'état de mémoire correct, et pour réinjecter à l'instance défaillante les données d'entrées depuis la période nd jusqu'à la période courante, en appliquant la fonction de transfert, éventuellement en retard par rapport aux dates de fin au plus tard correspondantes, et le moniteur est configuré, lorsque l'instance défaillante a rattrapé les instances fonctionnelles, c'est-à-dire appliqué, avant la n^ième date de fin au plus tard, la fonction de transfert sur les entrées jusqu'à la période n, les signatures étant à nouveau égales, pour déclarer l'instance défaillante comme à nouveau fonctionnelle.

Ainsi la séquence de signatures permet d'identifier une instance défaillante, d'identifier une instance fonctionnelle à partir de laquelle sera effectué le redémarrage et re-jeu de l'instance défaillante, puis d'identifier quand le re-jeu est terminé et l'instance à nouveau fonctionnelle.

Selon un mode de réalisation, un serveur relai est un serveur logiciel implémenté sur le calculateur correspondant.

Ainsi la mise en oeuvre est simplifiée.

Dans un mode de réalisation, un serveur relai est un serveur matériel implémenté au niveau du concentrateur de données.

Ainsi, le proxy n'est pas soumis au risque de défaillance de l'exécutif logiciel comme l'instance qu'il surveille.

Selon un mode de réalisation, le système comprend un réseau indépendant du concentrateur de données pour transmettre les signatures par les serveurs relais, de bande passante moins élevée et de fiabilité plus élevée que celles du concentrateur de données.

Ainsi, la comparaison des signatures risque moins d'être compromise par un défaut d'intégrité ou défaut temporel lié à la transmission entre le serveur relai et le moniteur.

Il est également proposé, selon un autre aspect de l'invention, un procédé de gestion d'au moins un service critique pour la sûreté de fonctionnement d'un système informatique embarqué à bord d'un porteur, le service critique étant en redondance en au moins deux instances sur des calculateurs respectifs différents connectés audit réseau,

chaque mise en oeuvre une instance du service critique utilise :

- une suite croissante de dates d'activation de tâche et une suite de dates correspondantes de fin au plus tard de tâche, relatives au démarrage du système, avec un écart entre une date de fin et la date d'activation correspondante supérieur ou égal à un seuil correspondant à une estimation du temps d'exécution ou du temps de réponse de la tâche ;

- une sauvegarde d'un état interne du calculateur entre deux activations successives du service par modélisation par enregistrement des états de mémoires de la tâche ;

- une mise à jour de l'état interne du calculateur à chaque activation du service, démarrant après la date d'activation correspondante lit les données d'entrée du service et calcule les données de sortie du service et les fournit au concentrateur de données, la dépendance entre d'une part l'état interne mis à jour et les données de sortie calculées et d'autre part l'état interne précédent et les données d'entrée lues étant représentée par une fonction de transfert ; et

- un calcul d'une signature par un serveur relai, caractéristique de l'exécution de l'instance du service depuis l'activation initiale du système jusqu'à la date de fin au plus tard en cours, par une chaîne de hachage dépendant d'une fonction de hachage sur nb bits, et une transmission de la signature au moniteur ;

une détection d'une défaillance par le moniteur étant effectuée en analysant les signatures des instances.

Le document US2019/235448 A1 divulgue un système embarqué à bord d'un porteur mettant en oeuvre au moins un service critique pour la sûreté de fonctionnement du porteur, communiquant en réseau avec un concentrateur de données et avec un moniteur et mettant en oeuvre au moins un service critique pour la sûreté de fonctionnement du, le service critique étant en redondance en au moins deux instances sur des calculateurs respectifs différents connectés audit réseau. Ledit document divulgue également au moins une tâche logicielle implémentant une instance du service critique et étant configuré pour mettre en oeuvre le service critique par cadencement par le temps en utilisant une suite croissante de dates d'activation de tâche et une suite de dates correspondantes de fin au plus tard de tâche, relatives au démarrage du système, avec un écart entre une date de fin et la date d'activation correspondante supérieur ou égal à un seuil correspondant à une estimation du temps d'exécution ou du temps de réponse de la tâche; ainsi qu'un serveur relais configuré pour calculer une signature et pour transmettre la signature au moniteur le moniteur détectant une défaillance en analysant les signatures.

L'invention sera mieux comprise à l'étude de quelques modes de réalisation décrits à titre d'exemples nullement limitatifs et illustrés par les dessins annexés sur lesquels :

[Fig.1a] illustre schématiquement un système selon un aspect de l'invention ;
[Fig.1b] illustre schématiquement un système selon un aspect de l'invention ; et
[Fig.2] illustre schématiquement le fonctionnement d'un système de la figure 1, comprenant deux instances du service.

Sur l'ensemble des figures, les éléments ayant des références identiques sont similaires.

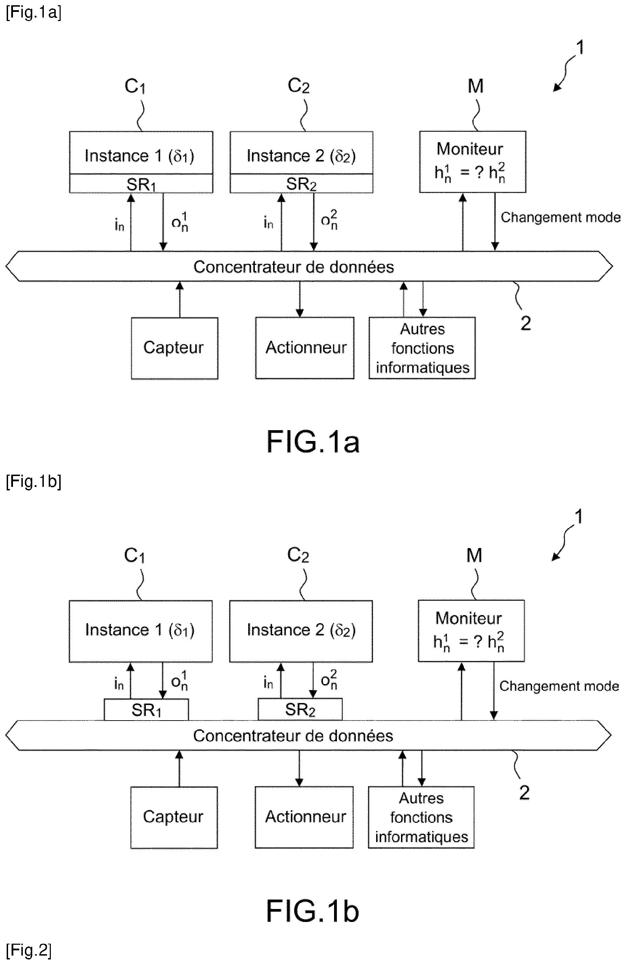

Les figures 1a et 1b illustrent schématiquement un système informatique 1 embarqué à bord d'un porteur, selon deux aspects de l'invention.
Un système informatique 1 embarqué à bord d'un porteur, communique en réseau avec un concentrateur de données 2 et avec un moniteur M, et met en oeuvre au moins un service critique pour la sûreté de fonctionnement du porteur, ou « safety critical » en langue anglaise, le service critique étant en redondance, i.e. exécuté en au moins deux instances $\delta_1, ... \delta_m$ sur des calculateurs respectifs différents $C_1, ..., C_m$ connectés

audit réseau, en l'espèce deux répliques sur deux calculateurs respectifs.
Chaque calculateur $C_1, ..., C_m$ met en oeuvre une instance $\delta_k$ du service critique, et est configuré pour mettre en oeuvre le service critique en utilisant :

- une suite croissante de dates d'activation $R_n$ du système et une suite de dates de fin correspondantes au plus tard $D_n$, relatives au démarrage du système, avec un écart entre une date de fin et la date d'activation correspondante supérieur ou égal à un seuil correspondant à une estimation du temps d'exécution du service WCET. Les dates Rn et Dn respectent les inégalités suivantes : vn, $0 < R_n < R_{n+1}$, $0 < D_n < D_{n+1}$, et $D_n - R_n \geq$ WCET ;
- une sauvegarde d'un état interne $s_n$ du calculateur (modélisation des états de mémoire, registres, variables du code) entre deux activations successives du service par modélisation par enregistrement des états de mémoires du calculateur ;
- une mise à jour de l'état interne $s_{n+1}$ du calculateur à chaque activation n du service, démarrant à la date d'activation correspondante $R_n$ lit les données d'entrée $i_n$ du service et calcule les données de sortie $o_n$ du service et les fournit au concentrateur de données 2, la dépendance entre d'une part l'état interne mis à jour et les données de sortie calculées $s_{n+1}$, on et d'autre part l'état interne précédent et les données d'entrée lues $s_n, i_n$ étant représentée par une fonction de transfert f ; et
- un serveur relai $SR_k$ configuré pour calculer une signature $h_{n+1}^k$, caractéristique de l'exécution de l'instance δk du service depuis l'activation initiale 0 du système jusqu'à la date de fin au plus tard en cours $D_n$, par une chaîne de hachage dépendant d'une fonction de hachage H sur nb bits, et pour transmettre la signature $h_{n+1}^k$ au moniteur M.

Le moniteur M détecte une défaillance en analysant les signatures $h_{n+1}^k$ des instances $\delta_1, ... \delta_m$.
Sur la figure 1a, un serveur relai $SR_k$ est un serveur logiciel implémenté sur le calculateur correspondant $C_k$, et sur la figure 1b un serveur relai $SR_k$ est un serveur matériel implémenté au niveau du concentrateur de données 2.
La fonction de hachage H est une fonction de hachage cryptographique, c'est-à-dire qu'à un message de taille arbitraire, elle associe une empreinte h dite rapide à calculer, résistante à l'attaque par pré-image (étant donné une empreinte h, il est impossible en pratique de construire un message m tel que H(m)=h), à l'attaque par seconde pré-image (connaissant m1, il est impossible en pratique de construire un message m2 tel que H(m2)=H(m1)) ainsi qu'aux collisions (il est impossible en pratique de construire deux message différents m1 et m2 tels que H(m1)=H(m2)).

Lorsqu'un service critique est redondé, plusieurs instances $\delta_k$ (k=1, 2...m) implémentent la même fonction de transfert f, mais sont susceptibles de défaillances. On note $X^k$ les variables modélisant le fonctionnement de l'instance k, et X celle décrivant une instance théorique sans défaut.

Chaque instance $\delta_k$ répond aux mêmes contraintes temporelles $R_n$ et $D_n$, est démarrée dans le même état initial $s_0^1 = s_0^2 = \cdots = s_0$ , et reçoit les mêmes entrées ($i_n$) avant la date $R_n$ (par envoi de message multicast ou envoi multiple). En conséquence, en mode nominal, toutes les instances calculent exactement les mêmes valeurs d'état interne $s_n^1 = s_n^2 = \cdots = s_n$ , et produisent les mêmes sortie $o_n^1 = o_n^2 = \cdots = o_n$ , avant la date au plus tard $D_n$ de la période en cours.

Les instances ne s'exécutent pas nécessairement simultanément, elles peuvent s'exécuter sur des calculateurs de fréquences différentes, ou peuvent également être préemptées par d'autres tâches. La seule hypothèse nécessaire est que la n$^{ième}$ exécution, ou n$^{ième}$ « job » en langue anglaise, s'exécute effectivement entre les dates d'activation $R_n$ et au plus tard $D_n$ en cours.

Supposons que l'instance $\delta_1$ comporte une erreur, activée lors du n$^{ième}$ job : faute interne $s_{n+1}^1 \neq s_{n+1}$ ou faute externe $o_n^1 \neq o_n$ . L'invention permet de détecter au plus tôt ces fautes, pour signaler, et déclencher le cas échéant un mode de fonctionnement dégradé.

La présente invention utilise le calcul d'une signature $h_n^k$ , caractéristique de l'exécution de chaque instance $\delta_k$ depuis son démarrage jusqu'à la date au plus tard en cours $D_n$, puis transmettre ces signatures à un moniteur M, qui les compare afin de détecter une erreur.

La signature $h_n^k$ est calculée par une chaîne de hachage $h_{n+1}^k = H\left(h_n^k, i_n^k, o_n^k, s_{n+1}^k\right)$ dans laquelle H est une fonction de hachage sur nb bits. Ce calcul peut être effectué par l'instance $\delta_k$. La signature $h_{n+1}^k$ est transmise au moniteur M via le concentrateur de données 2 avant la date plus tard en cours $D_n$. Après la date plus tard en cours $D_n$, le moniteur M compare toutes le signatures $h_{n+1}^k$ . En mode nominal, toutes les signatures sont égales.

En supposant que le système est resté dans un mode nominal jusqu'à la date au plus tard $D_{n-1}$, le moniteur M détecte une défaillance dans les cas suivants :

- si l'une des signatures $h_{n+1}^k$ n'a pas été reçue avant la date au plus tard $D_n$, ce qui peut être dû à :
- une faute temporelle au cours du nième job de l'instance $\delta_k$ (calcul non terminé à temps, et violation de la date au plus tard $D_n$), ou
- une faute temporelle dans la transmission d'un message comprenant une signature $h_{n+1}^k$ par le réseau (ou par ses pilotes ou logiciels),
- si l'une des signatures $h_{n+1}^k$ diffère des autres, ce qui peut être dû à :

> - une perte d'intégrité de l'implémentation de fonction de transfert $f_k \neq f$, l'activation de cette erreur conduit à un défaut de l'état interne $s_{n+1}^k \neq s_{n+1}$, ou des sorties $o_n^k \neq o_n$,
> - une perte d'intégrité, ou de disponibilité, des entrées $i_n$ reçues par l'instance k à la date d'activation Rn : $i_n^k \neq i_n$, ou
> - une erreur de calcul de la signature par le serveur relai $SR_k$, une perte d'intégrité, ou un retard de transmission du message contenant la signature $h_{n+1}^k$ au moniteur M : seuls ces deniers cas correspondent à un faux positif (le moniteur M signale alors un défaut sur l'instance $\delta_k$, alors qu'elle n'est pas en défaut).

Un faux négatif peut se produire lorsque :

- le moniteur M lui-même est défaillant; ce risque peut être réduit par divers moyens, dont la redondance du moniteur de sorte qu'il y ait au moins deux moniteurs M, M' ;
- une majorité des instances $\delta_k$ du service sont défaillantes et produisent la même signature :
- ce risque est classiquement considéré comme suffisamment improbable pour être toléré dans le cas de défaillances de nature aléatoires, indépendantes, ou transitoires (si chaque instance a une probabilité p de subir une défaillance aléatoire, et que les défaillances des instances sont supposées indépendantes, alors la probabilité que K répliques soient défaillantes est $p^K$),
- le risque de défauts permanents ou modes communs est classiquement réduit par des processus de conception, d'analyse et de tests rigoureux,
- les signatures sont toutes égales, pourtant une réplique dévie de sa spécification, c'est-à-dire :

$$\exists j \neq k, \left(o_n^j, s_{n+1}^j\right) \neq \left(o_n^k, s_{n+1}^k\right)$$ et pourtant

$$h_{n+1}^j = h_{n+1}^k$$ ; c'est-à-dire une collision pour la fonction de hachage :

- pour une fonction de hachage cryptographique ou contrôle de redondance de type CRC sur nb bits, cette collision a une probabilité $\frac{1}{2^{nb}}$ . En choisissant $nb \geq \alpha \log_2(10)$ on réduit ce risque à une probabilité acceptable $\mathbb{P} \leq 10^{-\alpha}$ . (par exemple, pour une probabilité de défaillance tolérée de $10^{-12}$ par heure de fonctionnement, avec comparaison de signatures à la période $\Pi$ = 10ms, soit $$\mathbb{P} = 10^{-12} \cdot \frac{10ms}{1h} \approx 2,8$$ . $10^{-18}$ par 10ms, nb > 64 bits est suffisant).

Lorsque le moniteur M détecte une déviation dans les signatures reçues, il peut la signaler à un dispositif de gestion de l'état de fonctionnement ou « health management » en langue anglaise, qui aura charge de désactiver les répliques, basculer sur un mode dégradé nommé mode FT pour acronyme de « Fault Tolerant » en langue anglaise, ou de redémarrer toutes les répliques dans un état de référence.

De façon complémentaire, si plus de deux répliques du service sont instanciées, le moniteur M peut déterminer, par un vote majoritaire, la ou les instances défaillantes, et les désactiver ou redémarrer sélectivement.

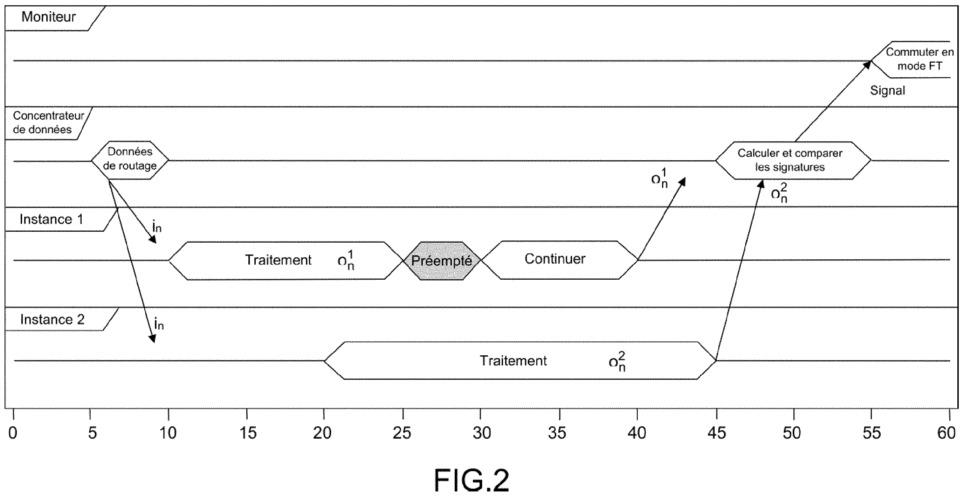

Comme illustré sur la figure 2, pour redémarrer une instance défaillante $\delta_k$, il faut qu'une instance non défaillante $\delta_j$ lui transmette une copie de son dernier état interne $s_n^j$ et de la signature $h_{n+1}^j$ corrects à l'itération n. L'instance $\delta_k$ les copie alors dans sa mémoire en écrasant les valeurs précédemment calculées (probablement erronées) : $s_{n+1}^k \leftarrow s_{n+1}^j$ et $h_{n+1}^k \leftarrow h_{n+1}^j$ ; le cas échéant, pendant une phase de re-jeu jusqu'à la date $R_{n+r+1}$, l'instance $\delta_k$ recalcule ses états internes et sorties, puis après la date d'activation $R_{n+1}$, l'instance $\delta_k$ reprend le fonctionnement spécifié.

L'invention permet de mettre en oeuvre très efficacement le principe de redondance, avec moins de contraintes qu'un « lock-step » classique, avec une surcharge (« overhead » en langue anglaise) réseau et calculatoire limitée puisque la signature peut être réalisée par un message très court. Cette charge est encore réduite si le calcul de signature est effectué par un accélérateur matériel.

A ce titre, le dispositif de génération de signature détaillé dans le brevet FR2989488B1 fournit une implémentation efficace de la signature de l'exécution. Dans le cas des fonctions sans état mémorisé (« stateless » en langue anglaise) ($s_n = \emptyset$), le calcul de la signature peut être effectué par le concentrateur de données lui-même.

## Revendications

1. Système informatique (1) embarqué à bord d'un porteur, communiquant en réseau avec un concentrateur de données (2) et avec un moniteur (M), et mettant en oeuvre au moins un service critique pour la sûreté de fonctionnement du porteur, le service critique étant en redondance en au moins deux instances ($\delta_1,... \delta_m$) sur des calculateurs respectifs différents ($C_1, ..., C_m$) connectés audit réseau,
   chaque calculateur ($C_k$) mettant en oeuvre au moins une tâche logicielle implémentant une instance ($\delta_k$) du service critique et étant configuré pour mettre en oeuvre le service critique par cadencement par le temps en utilisant :

   - une suite croissante de dates d'activation ($R_n$) de tâche et une suite de dates correspondantes de fin au plus tard ($D_n$) de tâche, relatives au démarrage (0) du système, avec un écart entre une date de fin et la date d'activation correspondante supérieur ou égal à un seuil correspondant à une estimation du temps d'exécution ou du temps de réponse de la tâche (WCET) ;
   - une sauvegarde d'un état interne ($s_n$) du calculateur entre deux activations successives du service par modélisation par enregistrement des états de mémoires de la tâche ;
   - une mise à jour de l'état interne ($s_{n+1}$) du calculateur à chaque activation (n) du service, démarrant après la date d'activation correspondante ($R_n$) lit les données d'entrée ($i_n$) du service et calcule les données de sortie ($o_n$) du service et les fournit au concentrateur de données (2), la dépendance entre d'une part l'état interne mis à jour et les données de sortie calculées ($s_{n+1}$, on) et d'autre part l'état interne précédent et les données d'entrée lues ($s_n$, $i_n$) étant représentée par une fonction de transfert (f) ; et
   - un serveur relai ($SR_k$) configuré pour calculer une signature ($h_{n+1}^k$), caractéristique de l'exécution de l'instance ($\delta_k$) du service depuis l'activation initiale (0) du système jusqu'à la date de fin au plus tard en cours ($D_n$), par une chaîne de hachage dépendant d'une fonction de hachage (H) sur nb bits, et pour transmettre la signature ($h_{n+1}^k$) au moniteur (M) ;

   le moniteur (M) détectant une défaillance en analysant les signatures ($h_{n+1}^1 \cdots h_{n+1}^m$) des instances ($\delta_1, ..., \delta_m$).

2. Système (1) selon la revendication 1, dans lequel un serveur relai est configuré pour calculer la signature par une chaîne de hachage utilisant une fonction de hachage cryptographique H, par récurrence pour chaque instance k, à chaque période n, par la relation suivante :

$$h_{n+1}^k = H\big(h_n^k, i_n^k, o_n^k\big)$$

   dans laquelle :

   $h_{n+1}^k$ représente la signature de l'instance k à la période n+1 ;

   $h_n^k$ représente la signature de l'instance k à la période n ;

   $i_n^k$ représente les données d'entrées du service de l'instance k à la période n ; et

   $o_n^k$ représente les données de sortie du service de l'instance k à la période n.

3. Système (1) selon l'une des revendications précédentes, dans lequel le moniteur (M) est configuré pour détecter une défaillance temporelle lorsqu'une signature ($h_{n+1}^k$) des instances ($\delta_1, ..., \delta_m$) n'a pas été reçue avant la date de fin au plus tard ($D_n$) de la période courante.

4. Système (1) selon l'une des revendications précédentes, dans lequel le moniteur (M) est configuré pour comparer les signatures reçues des serveurs relais ($SR_1, ..., SR_m$) détecter une défaillance fonctionnelle lorsqu'une signature ($h_{n+1}^k$) des instances ($\delta_1, ..., \delta_m$) diffère des autres signatures ($h_{n+1}^k$).

5. Système (1) selon l'une des revendications précédentes, dans lequel, lorsque le nombre d'instances du service est au moins égal à trois, et que moins de la moitié de ces instances sont défaillances, le moniteur (M) est configuré pour effectuer un vote majoritaire parmi les signatures reçues à temps fournissant une signature majoritaire désignant les instances fonctionnelles, les signatures différentes de la signature majoritaire désignant les instances défaillantes, et configuré pour signaler au reste du système les instances fonctionnelles et les instances défaillantes de sorte que la transmission des instances défaillantes soit interrompue sur le concentrateur de données (2).

6. Système selon la revendication 5, dans lequel, lorsqu'une instance est détectée comme défaillante à une période $n_d$, le calculateur hébergeant l'instance défaillante est configuré pour récupérer une copie d'un état de mémoire interne correct d'une autre instance fonctionnelle correspondant à la période $n_d$, redémarrer l'instance défaillante à partir de l'état de mémoire correct, et pour réinjecter à l'instance défaillante les données d'entrées depuis la période $n_d$ jusqu'à la période courante, en appliquant la fonction de transfert, éventuellement en retard par rapport aux dates de fin au plus tard correspondantes, et le moniteur (M) est configuré, lorsque l'instance défaillante a rattrapé les instances fonctionnelles, c'est-à-dire appliqué, avant la $n^{ième}$ date de fin au plus tard (Dn), la fonction de transfert sur les entrées jusqu'à la période n, les signatures étant à nouveau égales, pour déclarer l'instance défaillante comme à nouveau fonctionnelle.

7. Système selon l'une des revendications précédentes, dans lequel un serveur relai ($SR_k$) est un serveur logiciel implémenté sur le calculateur correspondant ($C_k$).

8. Système selon l'une des revendications 1 à 6, dans lequel un serveur relai ($SR_k$) est un serveur matériel implémenté au niveau du concentrateur de données (2).

9. Système selon l'une des revendications précédentes, comprenant un réseau indépendant (RI) du concentrateur de données pour transmettre les signatures par les serveurs relais ($SR_k$), de bande passante moins élevée et de fiabilité plus élevée que celles du concentrateur de données (2).

10. Procédé de gestion d'au moins un service critique pour la sûreté de fonctionnement d'un système informatique selon l'une des revendications 1 à 9, embarqué à bord d'un porteur, le service critique étant en redondance en au moins deux instances ($\delta_1$, ..., $\delta_m$) sur des calculateurs respectifs différents ($C_1$, ..., $C_m$) connectés audit réseau, chaque mise en oeuvre une instance ($\delta_k$) du service critique utilisant :

- une suite croissante de dates d'activation ($R_n$) de tâche et une suite de dates correspondantes de fin au plus tard ($D_n$) de tâche, relatives au démarrage (0) du système, avec un écart entre une date de fin et la date d'activation correspondante supérieur ou égal à un seuil correspondant à une estimation du temps d'exécution ou du temps de réponse de la tâche (WCET) ;

- une sauvegarde d'un état interne ($s_n$) du calculateur entre deux activations successives du service par modélisation par enregistrement des états de mémoires de la tâche ;
- une mise à jour de l'état interne ($s_{n+1}$) du calculateur à chaque activation (n) du service, démarrant après la date d'activation correspondante ($R_n$) lit les données d'entrée ($i_n$) du service et calcule les données de sortie ($o_n$) du service et les fournit au concentrateur de données (2), la dépendance entre d'une part l'état interne mis à jour et les données de sortie calculées ($s_{n+1}$, on) et d'autre part l'état interne précédent et les données d'entrée lues ($s_n$, $i_n$) étant représentée par une fonction de transfert (f) ; et

- un calcul d'une signature ($h_{n+1}^k$) par un serveur relai, caractéristique de l'exécution de l'instance ($\delta_k$) du service depuis l'activation initiale du système (0) jusqu'à la date de fin au plus tard en cours ($D_n$), par une chaîne de hachage dépendant d'une fonction de hachage (H) sur nb bits, et une transmission de la signature ($h_{n+1}^k$) au moniteur (M) ;

une détection d'une défaillance par le moniteur (M) étant effectuée en analysant les signatures ($h_{n+1}^k$) des instances ($\delta_1$, ..., $\delta_m$).

**Patentansprüche**

1. An Bord eines Trägers mitgeführtes Computersystem (1), das über ein Netzwerk mit einem Datenkonzentrator (2) und mit einem Monitor (M) kommuniziert und mindestens einen für die Betriebssicherheit des Trägers kritischen Dienst umsetzt, wobei der kritische Dienst in mindestens zwei Instanzen ($\delta_1$, ..., $\delta_m$) auf jeweils unterschiedlichen Rechnern ($C_1$, ..., $C_m$) redundant ist, die mit dem Netzwerk verbunden sind, wobei jeder Rechner ($C_k$) mindestens eine Softwareaufgabe umsetzt, die eine Instanz ($\delta_k$) des kritischen Dienstes implementiert, und so konfiguriert ist, dass er den kritischen Dienst durch Zeittaktung umsetzt, indem er Folgendes verwendet:

- eine ansteigende Folge von Aktivierungsdaten ($R_n$) der Aufgabe und eine Folge von entsprechenden spätesten Enddaten ($D_n$) der Aufgabe, die sich auf den Start (0) des Systems beziehen, mit einem Zeitabstand zwischen einem Enddatum und dem entsprechenden Aktivierungsdatum, der größer oder gleich einem Schwellenwert ist, der einer Schätzung der Ausführungszeit oder der Ansprechzeit der Aufgabe (WCET) entspricht;

- eine Sicherung eines internen Zustands ($s_n$) des Rechners zwischen zwei aufeinander folgenden Aktivierungen des Dienstes durch Modellierung durch Aufzeichnung der Speicherzustände der Aufgabe;

- eine Aktualisierung des internen Zustands ($s_{n+1}$) des Rechners bei jeder Aktivierung (n) des Dienstes, die nach dem entsprechenden Aktivierungsdatum ($R_n$) startet, die Eingangsdaten ($i_n$) des Dienstes liest und die Ausgangsdaten ($o_n$) des Dienstes berechnet und sie dem Datenkonzentrator (2) bereitstellt, wobei die Abhängigkeit zwischen einerseits dem aktualisierten internen Zustand und den berechneten Ausgangsdaten ($s_{n+1}$, on) und andererseits dem vorherigen internen Zustand und den gelesenen Eingangsdaten ($s_n$, $i_n$) durch eine Übertragungsfunktion (f) dargestellt wird; und

- einen Relais-Server ($SR_k$), der so konfiguriert ist, dass er eine Signatur ( $h_{n+1}^k$ ), die für die Ausführung der Instanz ($\delta_k$) des Dienstes von der anfänglichen Aktivierung (0) des Systems bis zum aktuellen spätesten Enddatum ($D_n$) charakteristisch ist, durch eine Hash-Kette berechnet, die von einer nb-Bit-Hash-Funktion (H) abhängt, und die Signatur ( $h_{n+1}^k$ ) an den Monitor (M) überträgt;

wobei der Monitor (M) einen Ausfall erkennt, indem er die Signaturen ( $h_{n+1}^1$, ..., $h_{n+1}^m$ ) der Instanzen ($\delta_1$, ..., $\delta_m$) analysiert.

2. System (1) nach Anspruch 1, wobei ein Relais-Server so konfiguriert ist, dass er die Signatur durch eine Hash-Kette, die eine kryptographische Hash-Funktion H verwendet, durch Rekursion für jede Instanz k in jeder Periode n durch die folgende Beziehung berechnet:

$$h_{n+1}^k = H\left(h_n^k, i_n^k, o_n^k\right)$$

wobei:

$h_{n+1}^k$ die Signatur der Instanz k in der Periode n+1 darstellt;

$h_n^k$ die Signatur der Instanz k in der Periode n darstellt;

$i_n^k$ die Eingabedaten des Dienstes der Instanz k in der Periode n darstellt; und

$o_n^k$ die Ausgabedaten des Dienstes der Instanz k in der Periode n darstellt.

3. System (1) nach einem der vorhergehenden Ansprüche, wobei der Monitor (M) so konfiguriert ist, dass er einen Zeitausfall erkennt, wenn eine Signatur $h_{n+1}^k$ der Instanzen ($\delta_1$, ..., $\delta_m$) nicht vor dem spätesten Enddatum ($D_n$) der aktuellen Periode empfangen wurde.

4. System (1) nach einem der vorhergehenden Ansprüche, wobei der Monitor (M) so konfiguriert ist, dass er die von den Relais-Servern ($SR_1$, ..., $SR_m$) empfangenen Signaturen vergleicht einen Funktionsausfall zu erkennen, wenn eine Signatur der Instanzen ($\delta_1$, ..., $\delta_m$) sich von den anderen Signaturen ( $h_{n+1}^k$ ) unterscheidet.

5. System (1) nach einem der vorhergehenden Ansprüche, wobei, wenn die Anzahl der Instanzen des Dienstes mindestens drei beträgt und weniger als die Hälfte dieser Instanzen fehlerhaft ist, der Monitor (M) so konfiguriert ist, dass er eine Mehrheitsabstimmung unter den rechtzeitig empfangenen Signaturen durchführt, die eine Mehrheitssignatur bereitstellt, welche die funktionierenden Instanzen bezeichnet, wobei Signaturen, die sich von der Mehrheitssignatur unterscheiden, die fehlerhaften Instanzen bezeichnen, und so konfiguriert ist, dass er dem Rest des Systems die funktionierenden Instanzen und die fehlerhaften Instanzen meldet, so dass die Übertragung der fehlerhaften Instanzen am Datenkonzentrator (2) unterbrochen wird.

6. System nach Anspruch 5, wobei, wenn eine Instanz in einer Periode $n_d$ als fehlerhaft erkannt wird, der Rechner, der die fehlerhafte Instanz beherbergt, so konfiguriert ist, dass er eine Kopie eines korrekten internen Speicherzustands einer anderen funktionalen Instanz, die der Periode $n_d$ entspricht, abruft, die fehlerhafte Instanz aus dem korrekten Speicherzustand neu startet und der fehlerhaften Instanz die Eingabedaten von der Periode $n_d$ bis zur aktuellen Periode wieder zuführt, durch Anwenden der Übertragungsfunktion, möglicherweise in Verzug auf die entsprechenden spätesten Enddaten, und der Monitor (M) konfiguriert ist, wenn die fehlerhafte Instanz die funktionierenden Instanzen eingeholt hat, d. h. vor dem n-ten spätesten Enddatum (Dn) die Übertragungsfunktion auf die Eingaben bis zum Zeitraum n angewandt hat, wobei die Signaturen wieder gleich sind, um die fehlerhafte Instanz wieder für funktionsfähig zu erklären.

7. System nach einem der vorhergehenden Ansprüche, wobei ein Relais-Server ($SR_k$) ein Software-

Server ist, der auf dem entsprechenden Rechner (C_k) implementiert ist.

8. System nach einem der Ansprüche 1 bis 6, wobei ein Relais-Server (SR_k) ein Hardware-Server ist, der am Datenkonzentrator (2) implementiert ist.

9. System nach einem der vorhergehenden Ansprüche, umfassend ein vom Datenkonzentrator unabhängiges Netzwerk (RI) zum Übertragen der Signaturen durch die Relais-Server (SR_k), mit einer geringeren Bandbreite und einer höheren Zuverlässigkeit als denjenigen des Datenkonzentrators (2).

10. Verfahren zur Verwaltung mindestens eines kritischen Dienstes für die Betriebssicherheit eines Computersystems nach einem der Ansprüche 1 bis 9, das an Bord eines Trägers mitgeführt wird, wobei der kritische Dienst in mindestens zwei Instanzen ($\delta 1, ..., \delta_m$) auf jeweils unterschiedlichen Rechnern (C_1, ..., C_m), die mit dem Netzwerk verbunden sind, redundant ist,

wobei jede Umsetzung einer Instanz ($\delta_k$) des kritischen Dienstes Folgendes verwendet:

- eine ansteigende Folge von Aktivierungsdaten (R_n) der Aufgabe und eine Folge von entsprechenden spätesten Enddaten (D_n) der Aufgabe, die sich auf den Start (0) des Systems beziehen, mit einem Zeitabstand zwischen einem Enddatum und dem entsprechenden Aktivierungsdatum, der größer oder gleich einem Schwellenwert ist, der einer Schätzung der Ausführungszeit oder der Ansprechzeit der Aufgabe (WCET) entspricht;
- eine Sicherung eines internen Zustands (s_n) des Rechners zwischen zwei aufeinander folgenden Aktivierungen des Dienstes durch Modellierung durch Aufzeichnung der Speicherzustände der Aufgabe;
- eine Aktualisierung des internen Zustands (s_{n+1}) des Rechners bei jeder Aktivierung (n) des Dienstes, die nach dem entsprechenden Aktivierungsdatum (R_n) startet, die Eingangsdaten (i_n) des Dienstes liest und die Ausgangsdaten (o_n) des Dienstes berechnet und sie dem Datenkonzentrator (2) bereitstellt, wobei die Abhängigkeit zwischen einerseits dem aktualisierten internen Zustand und den berechneten Ausgangsdaten (s_{n+1}, on) und andererseits dem vorherigen internen Zustand und den gelesenen Eingangsdaten (s_n, i_n) durch eine Übertragungsfunktion (f) dargestellt wird; und

- eine Berechnung einer Signatur ( $h_{n+1}^k$ ) durch einen Relais-Server, die charakteristisch für die Ausführung der Instanz ($\delta_k$) des Dienstes von der anfänglichen Aktivierung des Systems (0) bis zum spätesten aktuellen Enddatum (D_n) ist, durch eine Hash-Kette, die von einer nb-Bit-Hash-Funktion (H) abhängt, und eine Übertragung der Signatur ( $h_{n+1}^k$ ) an den Monitor (M);
wobei eine Erkennung eines Ausfalls durch den Monitor (M) durchgeführt wird, indem die Signaturen ( $h_{n+1}^k$ ) der Instanzen ($\delta_1, ..., \delta_m$) analysiert werden..

**Claims**

1. A computer system (1) installed on board a carrier, communicating in a network with a data concentrator (2) and with a monitor (M), and implementing at least one service that is critical for the operating safety of the carrier, the critical service being redundant in at least two instances ($\delta_1, ..., \delta_m$) on different respective computers (C_1, ..., C_m) connected to said network,

each computer (C_k) implementing at least one software task implementing an instance ($\delta_k$) of the critical service and being configured to implement the critical service through time-triggering by using:

- an increasing sequence of task activation dates (R_n) and a sequence of corresponding task latest end dates (D_n), relating to the starting (0) of the system, with an interval between an end date and the corresponding activation date above or equal to a threshold corresponding to an estimate of the execution time or of the response time of the task (WCET);
- a backup of an internal state (s_n) of the computer between two successive activations of the service by way of modelling by recording the memory states of the task;
- an update of the internal state (s_{n+1}) of the computer on each activation (n) of the service, starting after the corresponding activation date (R_n), reads the input data (i_n) of the service and computes the output data (o_n) of the service and provides them to the data concentrator (2), the dependency between firstly the updated internal state and the computed output data (s_{n+1}, on) and secondly the previous internal state and the read input data (s_n, i_n) being represented by a transfer function (f); and

- a relay server ($SR_k$) configured to compute a signature ( $h_{n+1}^k$ ), which is characteristic of the execution of the instance ($\delta k$) of the service from the initial activation (0) of the system to the current latest end date ($D_n$), by way of a hash chain dependent on a hash function (H) on nb bits, and to transmit the signature ( $h_{n+1}^k$ ) to the monitor (M);

the monitor (M) detecting a fault by analysing the signatures ( $h_{n+1}^1, \ldots, h_{n+1}^m$ ) of the instances ($\delta_1, ..., \delta_m$).

2. The system (1) according to claim 1, wherein a relay server is configured to compute the signature by way of a hash chain using a cryptographic hash function H, by recurrence for each instance k, in each period n, by way of the following relationship:

$$ h_{n+1}^k = H\big(h_n^k, i_n^k, o_n^k\big), $$

in which:

$h_{n+1}^k$ represents the signature of the instance k in the period n+1;

$h_n^k$ represents the signature of the instance k in the period n;

$i_n^k$ represents the input data of the service of the instance k in the period n; and

$o_n^k$ represents the output data of the service of the instance k in the period n.

3. The system (1) according to any one of the preceding claims, wherein the monitor (M) is configured to detect a temporal fault when a signature ( $h_{n+1}^k$ ) of the instances ($\delta_1, ..., \delta_m$) has not been received before the latest end date ($D_n$) of the current period.

4. The system (1) according to any one of the preceding claims, wherein the monitor (M) is configured to compare the signatures received from the relay servers ($SR_1, ..., SR_m$) detect an operational fault when a signature ( $h_{n+1}^k$ ) of the instances ($\delta_1, ..., \delta_m$) is different from the other signatures $h_{n+1}^k$ ).

5. The system (1) according to any one of the preceding claims, wherein, when the number of instances of the service is equal to at least three, and fewer than half of these instances are faulty, the monitor (M) is configured to take a majority vote among the signatures received in time, providing a majority signature denoting the operational instances, the signatures that are different from the majority signature denoting the faulty instances, and configured to signal to the remainder of the system the operational instances and the faulty instances so that the transmission of the faulty instances is interrupted on the data concentrator (2).

6. The system according to claim 5, wherein, when an instance is detected as faulty in a period $n_d$, the computer hosting the faulty instance is configured to retrieve a copy of a correct internal memory state of another operational instance corresponding to the period $n_d$, to restart the faulty instance from the correct memory state, and to feed back to the faulty instance the input data from the period $n_d$ to the current period, by applying the transfer function, possibly behind schedule in relation to the corresponding latest end dates, and the monitor (M) is configured so as, when the faulty instance has caught up with the operational instances, that is to say has applied, before the $n^{th}$ latest end date (Dn), the transfer function to the inputs up to the period n, the signatures being equal again, to report the faulty instance as operational again.

7. The system according to any one of the preceding claims, wherein a relay server ($SR_k$) is a software server implemented on the corresponding computer ($C_k$).

8. The system according to any one of claims 1 to 6, wherein a relay server ($SR_k$) is a hardware server implemented at the data concentrator (2).

9. The system according to any one of the preceding claims, comprising a network (RI) that is independent of the data concentrator for transmitting the signatures by way of the relay servers ($SR_k$), with a lower passband and higher reliability than those of the data concentrator (2).

10. A method for managing at least one service that is critical for the operating safety of a computer system according to any one of claims 1 to 9, installed on board a carrier, the critical service being redundant in at least two instances ($\delta_1, ..., \delta_m$) on different respective computers ($C_1, ..., C_m$) connected to said network,

each implementation of an instance ($\delta_k$) of the critical service using:

- an increasing sequence of task activation dates ($R_n$) and a sequence of corresponding task latest end dates ($D_n$), relating to the starting (0) of the system, with an interval between an end date and the corresponding activation date above or equal to a threshold corresponding to an estimate of the execution time or of the response time of the task (WCET);

- a backup of an internal state ($s_n$) of the computer between two successive activations of the service by way of modelling by recording the memory states of the task;

- an update of the internal state ($s_{n+1}$) of the computer on each activation (n) of the service, starting after the corresponding activation date ($R_n$), reads the input data ($i_n$) of the service and computes the output data ($o_n$) of the service and provides them to the data concentrator (2), the dependency between firstly the updated internal state and the computed output data ($s_{n+1}$, on) and secondly the previous internal state and the read input data ($s_n$, $i_n$) being represented by a transfer function (f); and

- a computation of a signature ($h_{n+1}^k$) by a relay server, which is characteristic of the execution of the instance (δk) of the service from the initial activation (0) of the system to the current latest end date ($D_n$), by way of a hash chain dependent on a hash function (H) on nb bits, and a transmission of the signature ($h_{n+1}^k$) to the monitor (M);

a detection of a fault by the monitor (M) being performed by analysing the signatures ($h_{n+1}^k$) of the instances ($δ_1$, ..., $δ_m$).

[Fig.1a]

FIG.1a

[Fig.1b]

FIG.1b

[Fig.2]

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019235448 A1

- FR 2989488 B1